# EUROPÄISCHE PATENTSCHRIFT

(11) **EP 3 454 035 B1**
(45) Veröffentlichungstag und Bekanntmachung des Hinweises auf die Patenterteilung: **12.01.2022**
(21) Anmeldenummer: 17189748.1
(22) Anmeldetag: 07.09.2017
(51) Int. Cl.: G01N 1/20

(54) **VORRICHTUNGEN ZUR KONTINUIERLICHEN ENTNAHME UND AUFBEREITUNG EINER FLUIDPROBE AUS EINER FLÜSSIGGASFÜHRENDEN PROZESSLEITUNG**
DEVICES FOR CONTINUOUSLY SAMPLING AND PREPARING A FLUID SAMPLE FROM A LIQUEFIED GAS CONVEYING PROCESS LINE
DISPOSITIFS DE PRÉLÈVEMENT ET DE TRAITEMENT CONTINUS D'UN ÉCHANTILLON DE FLUIDE À PARTIR D'UN CONDUIT DE TRAITEMENT TRANSPORTANT UN GAZ LIQUÉFIÉ

(43) Veröffentlichungstag der Anmeldung: 13.03.2019
(73) Patentinhaber: SICK AG, 79183 Waldkirch (DE)
(72) Erfinder: GORN, Tim, 77933 Lahr (DE); KROBOTH, Markus, 81541 München (DE)
(74) Vertreter: Manitz Finsterwald Patent- und Rechtsanwaltspartnerschaft mbB

(56) Entgegenhaltungen:
- EP-A1- 2 163 878
- WO-A1-2009/114980
- US-A- 3 357 256
- US-A- 5 161 381
- US-A1- 2012 138 268
- US-A1- 2014 230 521

## Beschreibung

Die vorliegende Erfindung betrifft eine Vorrichtung zur kontinuierlichen Entnahme und Aufbereitung einer Fluidprobe aus einer flüssiggasführenden Prozessleitung mit einer Probenleitung, die ein in die Flüssiggasleitung einführbares offenes Leitungsende aufweist.

Solche Vorrichtungen werden beispielsweise für die Analyse von Kohlenwasserstoffgemischen benötigt, die durch Prozessleitungen von Verflüssigungsanlagen und dergleichen gefördert werden. Eine kontinuierliche Analyse von Kohlenwasserstoffgemischen ist insbesondere auf dem Gebiet der Handhabung von Flüssiggasen, welche beispielsweise als Liquefied Petroleum Gas (LPG) oder verflüssigtes Erdgas (Liquefied Natural Gas, LNG) vorkommen, erforderlich.

Nach der Entnahme aus der Prozessleitung muss die flüssige Probe kontinuierlich verdampft werden, damit eine Konzentrationsbestimmung der Bestandteile mittels eines Gasanalysators erfolgen kann. Hierbei besteht das Problem, dass kurzkettige, leichter siedende Komponenten der Probe zuerst in die Gasphase übergehen, wohingegen die längerkettigen, schwerer siedenden Komponenten länger in der flüssigen Phase verbleiben. Dieses Phänomen wird als "Fraktionierung" bezeichnet. Fraktionierung tritt verstärkt auf, wenn die Siedepunkte der einzelnen Komponenten des Flüssigkeitsgemisches weit auseinander liegen. Aufgrund der Fraktionierung kommt es in der Praxis zu schwankenden Ergebnissen am Analysator. Eine zuverlässige und reproduzierbare Analyse ist häufig nicht gewährleistet.

Um die Fraktionierungsanteile möglichst gering zu halten, ist eine effektive Energieübertragung in einem räumlich begrenzten Bereich innerhalb einer möglichst kurzen Zeit und unter gleichzeitiger Druckreduzierung wünschenswert. Aus Gründen des Explosionsschutzes und eventueller Wärmeleitungseffekte kann die der Probe zugeführte thermische Energie nicht beliebig groß gewählt werden, was zu einer Limitierung der möglichen Heizleistung führt.

Bei Vorrichtungen der genannten Art können beheizte Druckregler zum Verdampfen der Probe eingesetzt werden. Solche Vorrichtungen weisen jedoch hohe Fraktionierungsanteile auf, die für viele Anwendungen nicht akzeptabel sind. Außerdem besteht bei der Verwendung von beheizten Druckminderern ohne Probenahmesonde, wie sie üblicherweise an flüssiggasführenden Prozessleitungen eingesetzt werden, das Problem der großen zeitlichen Verzögerung zwischen tatsächlicher Probenahme aus dem Prozessstrom und der Analyse im Prozessanalysator.

Die EP 2 163 878 A1 offenbart eine Vorrichtung zur Probenentnahme kryogener Flüssigkeiten aus einem Reservoir, bei welcher die Flüssigkeit über einen Rohrstutzen entnommen und einer Verdampfereinheit zugeführt wird. Innerhalb der Verdampfereinheit ist die Probenleitung spiralförmig um einen Heizblock gewickelt.

In der US 2012/0138268 A1 ist ein Wärmetauscher offenbart, bei dem Kühlflüssigkeit durch eine gewundene Rohrleitung geführt wird. Zum Erzeugen einer Turbulenz in der Strömung kann ein Drahtgeflecht vorgesehen sein.

Die US 5 161 381 A offenbart eine Vorrichtung zur Entnahme kryogener Flüssigkeiten aus einem Reservoir, bei welcher an der Spitze der Entnahmeleitung eine Öffnung vorgesehen ist, die maximal etwa halb so groß ist wie der Leitungsquerschnitt.

Die US 2014/0230521 A1 offenbart eine Anlage zur Verdampfung von Flüssiggas, welche einen mehrstufigen Verdampfer, einen Akkumulator und einen Druckminderer umfasst. Eine der Verdampfer-Stufen weist eine Anordnung von Heizpatronen auf, um welche die Entnahmeleitungen spiralförmig herumgewunden sind.

In der US 3 357 256 A ist eine Probenentnahmevorrichtung für kryogene Flüssigkeiten offenbart, bei der die Entnahmeleitung auf ihrem Weg vom Reservoir bis zur Verdampfungskammer in einem Umhüllungsrohr angeordnet ist, das mit einem Kühlmittel gespült wird. Die Entnahmeleitung umfasst einen verengten Abschnitt.

Es besteht das Bedürfnis, bei der Entnahme und Aufbereitung von Proben aus Flüssiggasleitungen den Fraktionierungsanteil zu verringern und die zeitliche Verzögerung möglichst klein zu halten.

Die Lösung der Aufgabe erfolgt durch eine Vorrichtung mit den Merkmalen des Anspruchs 1.

Eine erfindungsgemäße Vorrichtung umfasst eine außerhalb der Flüssiggasleitung anzuordnende Verdampfer-Einheit zum wenigstens teilweisen Verdampfen von durch die Probenleitung strömenden Fluiden, wobei die Verdampfer-Einheit wenigstens einen beheizbaren Körper umfasst. Erfindungsgemäß ist vorgesehen, dass ein erster Verdampfungsabschnitt der Probenleitung in einer Abwärtsschraube verläuft und in einem wärmeleitenden Kontakt mit dem beheizbaren Körper steht. Weiterhin sieht die Erfindung vor, dass ein stromabwärts des ersten Verdampfungsabschnitts befindlicher zweiter Verdampfungsabschnitt der Probenleitung in einer Aufwärtsschraube verläuft und ebenfalls in einem wärmeleitenden Kontakt mit dem beheizbaren Körper steht.

Die schraubenförmige Leitungsführung sorgt in Verbindung mit dem wärmeleitenden Kontakt zum beheizbaren Körper für eine besonders effektive und räumlich definierte Übertragung thermischer Energie auf das strömende Probenmedium sowie für eine gleichzeitige Reduzierung des Druckes. Dadurch kann der Fraktionierungsanteil auf einen besonders geringen Restwert begrenzt werden. Die Erfindung ermöglicht somit eine zuverlässige kontinuierliche Analyse von Stoffproben, die aus Flüssiggasleitungen entnommen wurden.

Erfindungsgemäß ist vorgesehen, dass der erste Verdampfungsabschnitt und der zweite Verdampfungsabschnitt um den beheizbaren Körper herumgeführt sind. Der beheizbare Körper kann somit in allen radialen Richtungen Energie auf die Probenleitung und das darin strömende Fluid abgeben.

Nach der Verdampfer-Einheit kann die Probenleitung in einen Anschluss für einen Gasanalysator münden oder direkt mit einem Gasanalysator verbunden sein. Um lokale Konzentrationsänderungen zu kompensieren, kann stromabwärts des zweiten Verdampfungsabschnitts wenigstens ein Mischbehälter, insbesondere ein Ackumulator, in die Probenleitung integriert sein.

Um eine gleichmäßige Wärmeverteilung in der Rohrleitung sicherzustellen, kann/können der erste Verdampfungsabschnitt und/oder der zweite Verdampfungsabschnitt an dem beheizbaren Körper anliegen, vorzugsweise entlang der gesamten Abwärtsschraube bzw. entlang der gesamten Aufwärtsschraube. Bei dem beheizbaren Körper kann es sich insbesondere um einen elektrisch beheizbaren Körper handeln.

Vorzugsweise ist in dem ersten Verdampfungsabschnitt der Probenleitung ein Drahtgeflecht angeordnet. Das Drahtgeflecht begünstigt eine Durchmischung der flüssigen und der gasförmigen Bestandteile in der Probenleitung und sorgt so in ähnlicher Weise wie bei einer Mehrfachdestillation für eine effektivere Verdampfung der flüssigen Bestandteile. Außerdem fördert die durch das Drahtgeflecht bewirkte Reduzierung des Leitungsquerschnitts und gegebenenfalls die erzeugte Turbulenz den Druckabfall in der Probenleitung, was einer effektiven Verdampfung ebenfalls entgegenkommt. Zusätzlich dient das Drahtgeflecht zur Effektivitätsmaximierung des Wärmeübertrages.

Das Drahtgeflecht kann insbesondere aus Stahldraht gefertigt sein. Da sich das Drahtgeflecht in unmittelbarer Nähe zum beheizbaren Körper befindet, wird es durch diesen aufgeheizt und steigert so die Übertragung thermischer Energie auf das Probenmedium. Bei Bedarf könnte das Drahtgeflecht auch direkt beheizt werden, beispielsweise auf elektrischem Wege.

Eine spezielle Ausgestaltung der Erfindung sieht vor, dass das Drahtgeflecht bezogen auf den Leitungsquerschnitt des ersten Verdampfungsabschnitts zentral angeordnet ist und/oder sich zumindest im Wesentlichen entlang der gesamten Abwärtsschraube erstreckt. Es ist also bevorzugt, dass das Drahtgeflecht länglich ist und koaxial zur Probenleitung verläuft, sodass die Turbulenzerzeugung gleichmäßig ist.

Der beheizbare Körper kann eine zylindrische Form aufweisen, damit sich die Abwärtsschraube und die Aufwärtsschraube jeweils gut an den beheizbaren Körper anlegen können. Bevorzugt fällt hierbei eine Zylinderachse des beheizbaren Körpers mit einer Schraubenachse der Abwärtsschraube und/oder mit einer Schraubenachse der Aufwärtsschraube zusammen.

Eine besonders einfach herstellbare Ausführungsform der Erfindung sieht vor, dass der beheizbare Körper einen Metallblock, insbesondere einen Aluminiumblock, umfasst.

Der Metallblock kann eine Aussparung aufweisen, in die ein elektrisches Heizelement wie zum Beispiel eine Heizpatrone einsetzbar ist. Dies ermöglicht eine besonders einfache Konstruktion.

Die Verdampfer-Einheit kann außerdem eine Heizmanschette umfassen, die den ersten Verdampfungsabschnitt und den zweiten Verdampfungsabschnitt wenigstens teilweise umschließt. Dies ermöglicht eine Beheizung der schraubenförmigen Verdampfungsabschnitte von außen. Bei bestimmten Anwendungen könnte es sogar ausreichend sein, ausschließlich eine Heizung der Verdampfungsabschnitte mittels einer Heizmanschette vorzusehen. Bevorzugt ist es aber vorgesehen, dass zumindest ein Metallblock mit um diesen herumgeführten Verdampfungsabschnitten und besonders bevorzugt sowohl ein Metallblock mit um diesen herumgeführten Verdampfungsabschnitten als auch eine Heizmanschette bereitgestellt sind. Es versteht sich, dass eine Heizung der Verdampfungsabschnitte von außen und von innen besonders effektiv ist.

Eine weitere Ausführungsform der Erfindung sieht vor, dass zwischen dem ersten Verdampfungsabschnitt und dem zweiten Verdampfungsabschnitt eine Abscheidevorrichtung zum Abscheiden von Restflüssigkeit aus der Probenleitung angeordnet ist. Die unvermeidliche Restflüssigkeit sammelt sich in der durch den Übergang von der Abwärtsspirale zur Aufwärtsspirale gebildeten Senke und kann an dieser Stelle effektiv aus dem Probenleitungssystem entfernt werden.

Die Abscheidevorrichtung kann einen Koaleszenzfilter und bevorzugt ein Nadelventil umfassen. Der Koaleszenzfilter kann ein polares, netzartiges Material umfassen, welches Aerosole und flüssige Bestandteile von der Gasphase abtrennt.

Ein Nadelventil ermöglicht ein partielles Ableiten von gasförmigem Probenmaterial, um eine unerwünschte Überladung des Koaleszenzfilters zu vermeiden.

Die Abscheidevorrichtung kann je nach Bedarf, dem zu untersuchenden Fluid oder den äußeren Gegebenheiten und Notwendigkeiten zu- oder abgeschaltet werden.

Eine erfindungsgemäße Vorrichtung kann eine an der Flüssiggasleitung anbringbare Anschlusseinrichtung aufweisen, über welche das offene Leitungsende in die Flüssiggasleitung einführbar und aus der Flüssiggasleitung entfernbar ist. Die Entnahmevorrichtung kann aufgrund der Anschlusseinrichtung leicht abgebaut oder ausgewechselt werden.

Um ein Verschließen der Flüssiggasleitung nach einer Entnahme der Vorrichtung zu ermöglichen, kann die Anschlusseinrichtung eine bedienbare Absperrvorrichtung, insbesondere einen Kugelhahn, umfassen.

Alternativ oder zusätzlich kann die Anschlusseinrichtung eine Verschraubung, insbesondere eine Graphitringverschraubung, umfassen.

Eine weitere Ausführungsform der Erfindung sieht vor, dass das offene Leitungsende an einem Entnahmeabschnitt der Probenleitung ausgebildet ist, der einen gegenüber dem ersten Verdampfungsabschnitt verringerten Leitungsquerschnitt aufweist. Es ist also bevorzugt, dass der Leitungsquerschnitt der Probenleitung vor oder bei dem Eintritt in die Verdampfer-Einheit vergrößert wird. Dadurch wird ein ausreichendes Volumen für das in die Gasphase übergehende Probenmaterial zur Verfügung gestellt. Der vergleichsweise geringe Leitungsquerschnitt des Entnahmeabschnitts wird in seinen Dimensionen hingegen so gewählt, dass er für einen druckreduzierenden Kapillareffekt sorgt, und wird daher auch als Kapillare bezeichnet. Bei dieser weiteren Ausführungsform kann wirkungsvoll erreicht werden, dass die eigentliche Verdampfung erst während oder nach einer Druckreduktion erfolgt. Vorzugsweise ist vorgesehen, dass der Entnahmeabschnitt einen Leitungsquerschnitt von höchstens 1,5 mm aufweist und/oder der erste Verdampfungsabschnitt einen Leitungsquerschnitt von wenigstens 3 mm aufweist. Die Kapillare ist jedoch gegebenenfalls an die speziellen Anforderungen individuell angepasst.

Eine weitere Ausführungsform der Erfindung sieht vor, dass der Entnahmeabschnitt zumindest bereichsweise einen schraubenförmigen Verlauf aufweist und somit die Länge des Entnahmeabschnittes innerhalb gewisser Grenzen unabhängig vom Bauraum individuell gewählt werden kann. Somit kann ein beträchtlicher Teil der erforderlichen Druckreduzierung innerhalb der Prozessleitung erfolgen, wo es aufgrund des den Entnahmeabschnitt umströmenden Flüssiggases zu einer Temperaturstabilisierung kommt. Unerwünschte Vorverdampfungen, welche die Fraktionierung erhöhen, können so wirkungsvoll vermieden bzw. verringert werden.

Der Entnahmeabschnitt kann in einem Gehäuse angeordnet sein, das wenigstens eine freie Einströmöffnung, wenigstens eine freie Ausströmöffnung und eine dem offenen Leitungsende zugeordnete Entnahmeöffnung aufweist. Dies dient einerseits der Stabilisierung innerhalb der Prozessleitung und andererseits einer Vereinfachung der Entnahme aus der Prozessleitung. Die freie Einströmöffnung und die freie Ausströmöffnung gewährleisten eine Umströmung des Entnahmeabschnitts durch das Prozessfluid und somit eine erwünschte Kühlung des Probenfluids, während durch die Entnahmeöffnung das Probenmaterial abgeführt wird. Das Gehäuse kann insbesondere rohrförmig sein, also zum Beispiel als Schutzrohr oder Stützrohr ausgeführt sein.

Bevorzugt ist die Entnahmeöffnung so ausgestaltet, dass sie im montierten Zustand der Vorrichtung quer zu der freien Einströmöffnung, quer zu der freien Ausströmöffnung und/oder quer zu einer Hauptströmungsrichtung der Flüssiggasleitung ausgerichtet ist. Durch Wahl der Durchflussgeschwindigkeit und des Rohrleitungsdurchmessers kann ein erwünschter Druckverlust im Entnahmeabschnitt der Probenleitung erzeugt werden. Auf diese Weise kann die entnommene Probe in einen moderaten Druckbereich überführt werden. Außerdem kann erreicht werden, dass der Entnahmeabschnitt von gegebenenfalls kühlen Prozessfluiden in der flüssiggasführenden Prozessleitung umströmt wird, wodurch ebenfalls eine zu frühzeitige Verdampfung wirkungsvoll verringert bzw. vermieden werden kann.

Wie beschrieben entfalten die vorstehend angegebenen, auf den Entnahmeabschnitt bezogenen Merkmale auch vorteilhafte technische Wirkungen, die der Lösung der Aufgabe dienen aber unabhängig von der Ausgestaltung der Verdampfer-Einheit sind, so dass für diese Merkmale auch separat Schutz beansprucht wird (Anspruch 11 und entsprechende Unteransprüche). Bei einer gemäß Anspruch 11 gestalteten Vorrichtung ist das offene Leitungsende an einem Entnahmeabschnitt der Probenleitung ausgebildet, der einen gegenüber dem nachfolgenden Probenleitungsabschnitt verringerten Leitungsquerschnitt aufweist, wobei der Entnahmeabschnitt zumindest bereichsweise einen schraubenförmigen Verlauf aufweist.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine schematische Darstellung einer erfindungsgemäßen Vorrichtung zur Entnahme und Aufbereitung einer Fluidprobe aus einer Flüssiggasleitung.
- Fig. 2: zeigt einen Entnahmeabschnitt einer Probenleitung der in Fig. 1 gezeigten Vorrichtung.
- Fig. 3: zeigt eine Verdampfer-Einheit der in Fig. 1 dargestellten Vorrichtung.
- Fig. 4: zeigt ein in einer Probenleitung der Vorrichtung gemäß Fig. 1 angeordnetes Drahtgeflecht.
- Fig. 5: ist eine vergrößerte Teildarstellung der in Fig. 1 gezeigten Vorrichtung, welche eine an der Flüssiggasleitung angebrachte Anschlusseinrichtung genauer zeigt.
- Fig. 6: zeigt einen Abschnitt der Anschlusseinrichtung gemäß Fig. 5 mit einem in die Flüssiggasleitung eingeführten Ende der Probenleitung.
- Fig. 7: zeigt die Anordnung gemäß Fig. 6 während des Entfernens des Endes der Probenleitung aus der Flüssiggasleitung.

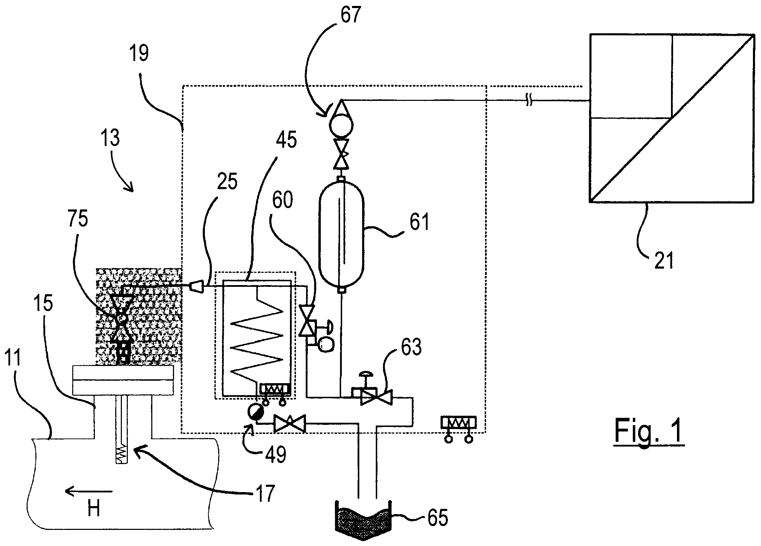

Die in Fig. 1 nur teilweise dargestellte Flüssiggasleitung 11 dient zur Förderung von verflüssigten Gasen wie zum Beispiel LPG oder LNG entlang einer Hauptströmungsrichtung H und kann beispielsweise Bestandteil einer Verflüssigungsanlage sein. Um die in der Flüssiggasleitung 11 strömenden Fluide zu analysieren, ist eine erfindungsgemäße Probeentnahmevorrichtung 13 vorgesehen. Die Probenentnahmevorrichtung 13 umfasst eine mittels einer Anschlusseinrichtung 15 an der Flüssiggasleitung 11 montierte Probenspitze 17, über welche eine Probe der durch die Flüssiggasleitung 11 strömenden Fluide aus der Flüssiggasleitung 11 herausgeführt wird, sowie eine Verdampfer-Einheit 19 zum wenigstens teilweisen Verdampfen der entnommenen Fluide. Die Verdampfer-Einheit 19 ist außerhalb der Flüssiggasleitung 11 in unmittelbarer Nähe zur Anschlusseinrichtung 15 angeordnet. Nach Passieren der Verdampfer-Einheit 19 werden die Probenfluide einem Gasanalysator 21 zugeführt, der wenigstens einen nicht einzeln dargestellten Gaskonzentrationssensor umfasst.

Das Entnehmen und Aufbereiten der Probenfluide erfolgt in einer Probenleitung 25, die in mehrere unterschiedlich gestaltete Abschnitte unterteilt ist, wie nachfolgend näher ausgeführt ist. Insgesamt kann die Probenleitung 25 eine Länge von mehreren Metern aufweisen.

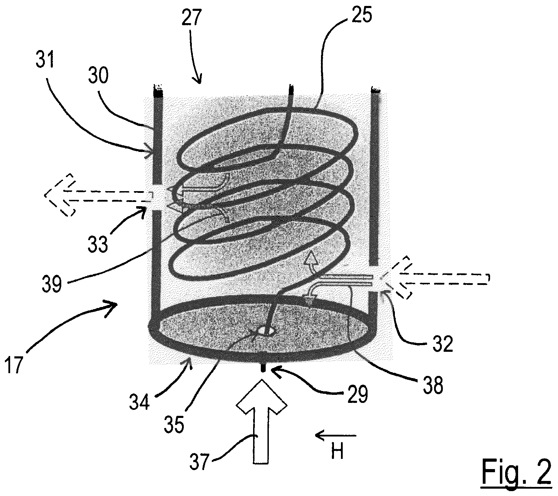

Fig. 2 zeigt einen Entnahmeabschnitt 27 der Probenleitung 25, der sich im Bereich der Probenspitze 17 befindet und sich ausgehend von einem stromaufwärtigen offenen Ende 29 der Probenleitung 25 erstreckt. Wie dargestellt weist der Entnahmeabschnitt 27 einen schraubenförmigen Verlauf auf und ist von einem Schutzrohr 30 umhüllt. Das Schutzrohr 30 weist eine Mantelfläche 31 auf, in welcher eine Einströmöffnung 32 sowie eine dieser gegenüberliegende Ausströmöffnung 33 ausgebildet ist. An einer Stirnfläche 34 des Schutzrohrs 30 ist außerdem eine Entnahmeöffnung 35 ausgebildet. Das offene Ende 29 der Probenleitung 25 ist durch die Entnahmeöffnung 35 aus dem Schutzrohr 30 herausgeführt und ragt quer zu der Hauptströmungsrichtung H in die Flüssiggasleitung 11 (Fig. 1) hinein.

Der Entnahmeabschnitt 27 weist einen derart geringen Leitungsquerschnitt auf, dass aufgrund des Kapillareffekts ein Eintreten von Fluid in die Probenleitung 25 erfolgt. Das Eintreten erfolgt quer zur Hauptströmungsrichtung H, wie durch den Pfeil 37 dargestellt ist. Die Einströmöffnung 32 und die Ausströmöffnung 33 bewirken, dass der Entnahmeabschnitt 27 der Probenleitung 25 während des Betriebs der zugehörigen Anlage von kühlen Prozessfluiden wie z.B. LPG oder LNG umströmt wird, wie durch die Pfeile 38 und 39 angegeben ist.

Beim Durchströmen des Entnahmeabschnitts 27 verringert sich der Druck der Probenfluide, wodurch eine nachfolgende Verdampfung vereinfacht wird. Durch Anpassung der Leitungslänge, des Leitungsquerschnitts sowie der Oberflächenbeschaffenheit der Innenwand des Entnahmeabschnitts 27 kann eine gewünschte vorgegebene Druckverringerung erzielt werden.

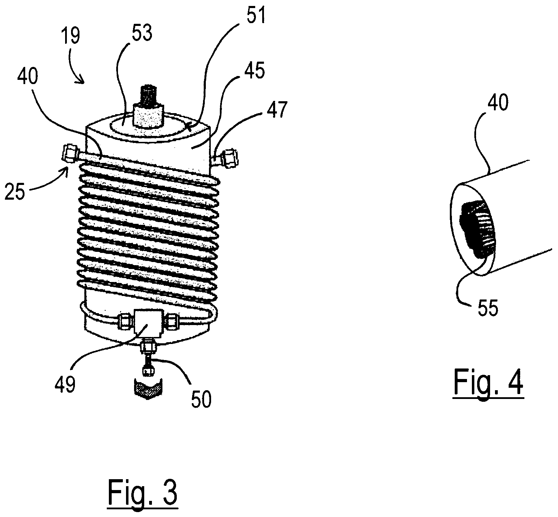

Wie in Fig. 1 in Verbindung mit Fig. 3 erkennbar gezeigt, befindet sich stromabwärts des Entnahmeabschnitts 27 ein der Verdampfer-Einheit 19 zugeordneter erster Verdampfungsabschnitt 40 der Probenleitung 25, der in einer Abwärtsspirale um einen beheizbaren Körper 45 herumgeführt ist. Ein zweiter Verdampfungsabschnitt 47 ist stromabwärts des ersten Verdampfungsabschnitts 40 angeordnet und entlang einer Aufwärtsspirale um den beheizbaren Körper 45 herumgeführt. Zwischen dem ersten Verdampfungsabschnitt 40 und dem zweiten Verdampfungsabschnitt 47 ist eine Abscheidevorrichtung 49 zum Abscheiden von Restflüssigkeit aus der Probenleitung 25 angeordnet. Die Abscheidevorrichtung 49 umfasst einen Koaleszenzfilter (nicht dargestellt) und ein Nadelventil 50.

Bei dem beheizbaren Körper 45 handelt es sich vorzugsweise um einen Aluminiumblock, der eine zylindrische Form aufweist und mit einer zentralen Aussparung 51 versehen ist. In die zentrale Aussparung 51 ist eine elektrische Heizpatrone 53 eingesetzt. Zusätzlich kann eine den ersten Verdampfungsabschnitt 40 und den zweiten Verdampfungsabschnitt 47 umschließende elektrische Heizmanschette vorgesehen sein, welche in Fig. 3 jedoch nicht dargestellt ist.

Sowohl der erste Verdampfungsabschnitt 40 als auch der zweite Verdampfungsabschnitt 47 weisen einen Leitungsquerschnitt auf, der gegenüber dem Leitungsquerschnitt des Entnahmeabschnitts 27 (Fig. 2) vergrößert ist. Beispielsweise können der erste Verdampfungsabschnitt 40 und der zweite Verdampfungsabschnitt 47 einen Leitungsquerschnitt von 6,35 mm aufweisen. Der Entnahmeabschnitt 27 kann einen Leitungsquerschnitt von etwa 1,5 mm aufweisen. Vorzugsweise sind der erste Verdampfungsabschnitt 40 und der zweite Verdampfungsabschnitt 47 als Edelstahlrohre ausgeführt.

In dem ersten Verdampfungsabschnitt 40 der Probenleitung 25 ist ein Drahtgeflecht 55 angeordnet, wie in Fig. 4 dargestellt ist. Das Drahtgeflecht 55 besteht vorzugsweise aus Stahldraht und erstreckt sich dem Verlauf der Abwärtsschraube folgend durch den gesamten ersten Verdampfungsabschnitt 40 hindurch.

Nach Passieren des zweiten Verdampfungsabschnitts 47 wird das Fluid in der Probenleitung 25 über ein in Fig. 1 gezeigtes erstes Ventil 60 einem Akkumulator 61 und anschließend dem Gasanalysator 21 zugeführt. Ein stromabwärts des ersten Ventils 60 angeordnetes zweites Ventil 63 dient dazu, bei Bedarf einen Teil des Probenfluids abzutrennen und einem Ablass 65 zuzuführen. Mittels des zweiten Ventils 63 kann eine Durchflussjustage vorgenommen werden. In den Ablass 65 mündet auch die Abscheidevorrichtung 49.

Im ersten Verdampfungsabschnitt 40 erfolgt ein gleichgerichteter Transport der bereits in die Gasphase übergegangenen Bestandteile der Probe zusammen mit den flüssigen Bestandteilen im Verlauf der Abwärtsbewegung. Dabei wird der Druck allmählich abgebaut. Durch das Drahtgeflecht 55 (Fig. 4) findet eine Durchmischung der gasförmigen und flüssigen Bestandteile statt, woraus eine besonders effektive Verdampfung der sich noch in der flüssigen Phase befindlichen Bestandteile resultiert. Bis zum Ende des ersten Verdampfungsabschnitts 40 findet eine effektive Partialverdampfung derjenigen Probenbestandteile statt, welche einen Siedepunkt unterhalb der Temperatur des beheizbaren Körpers 45 aufweisen. Nach Abtrennung der verbliebenen flüssigen Probenbestandteile in der Abscheidevorrichtung 49 wird die gasförmige Probe im zweiten Verdampfungsabschnitt 47 aufwärts um den beheizbaren Körper 45 herumgeführt. Aufgrund der ansteigenden Probenleitung 25 im Bereich des zweiten Verdampfungsabschnitts 47 gelangen verbliebene flüssige Bestandteile zum Beispiel schwerkraftbedingt nach unten und können abgeschieden werden.

Vor der Analyse passiert die Probe den Akkumulator 61, welcher als Mischbehälter fungiert, um lokale Konzentrationsänderungen zu kompensieren. Zur Durchfluss- und Verdampfungsjustage wird ein Teil der gasförmigen Probe mittels des zweiten Ventils 63 abgetrennt. Die gasförmige Restprobe wird mittels eines Druckreglers 67 druckreduziert. Anschließend wird die gasförmige Restprobe dem Gasanalysator 21 zugeführt. Eine Isolierung der nach dem Entnahmebereich befindlichen Leitungen ist bevorzugt.

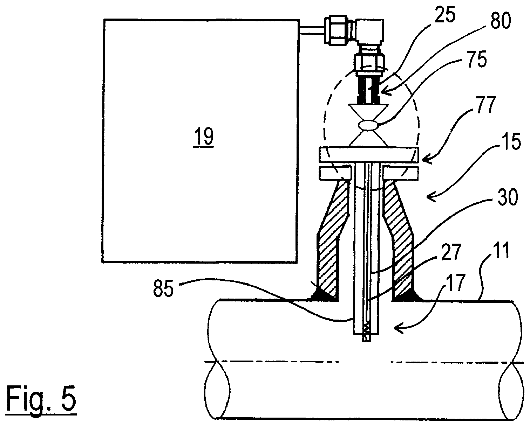

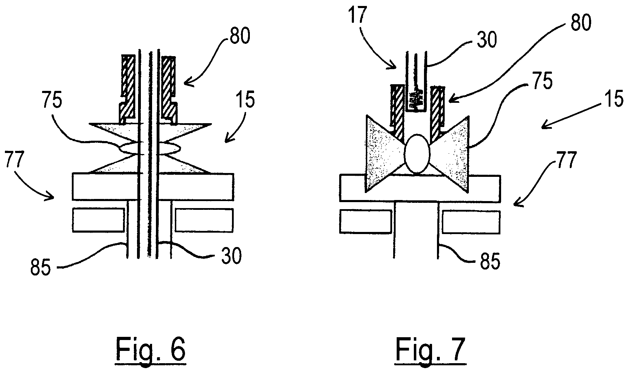

Ein bedarfsweises Entnehmen der Probenspitze 17 aus der Flüssiggasleitung 11 wird nachfolgend unter Bezugnahme auf die Fig. 5 bis 7 beschrieben. Wie in Fig. 5 erkennbar umfasst die Anschlusseinrichtung 15 einen Flansch 77, einen Kugelhahn 75 sowie eine Graphitringverschraubung 80. Zum Entnehmen der Probenspitze 17 wird die Graphitringverschraubung 80 langsam gelöst, woraufhin die Probenspitze 17 durch den Prozessdruck langsam aus der Flüssiggasleitung 11 herausgedrückt wird (Fig. 6). Sobald die Probenspitze 17 wie in Fig. 7 gezeigt den Kugelhahn 75 passiert hat, kann dieser geschlossen und die Probenspitze 17 vollständig herausgezogen werden. Die erneute Einführung der Probenspitze 17 in die Flüssiggasleitung 11 sollte dann bei einem Prozessdruck von weniger als 5 bar erfolgen. Vorzugsweise wird die Graphitringverschraubung 80 nach jeder Benutzung ersetzt.

In Fig. 5 ist eine das Schutzrohr 30 im eingeführten Zustand umhüllende Führung 85 erkennbar, die insbesondere auch beim Einführen für mechanische Sicherheit sorgt.

Vorteilhafterweise wird zwischen dem Kugelhahn 75 und der Verdampfer-Einheit 19 ein die (im Schutzrohr 30 angeordnete) Probenleitung zumindest bereichsweise umschließendes Teflonrohr zur thermischen Isolation vorgesehen.

Eine erfindungsgemäße Probenentnahmevorrichtung 13 ermöglicht im Bereich der Probenspitze 17 eine Druckreduzierung ohne Vorverdampfung und im Bereich der Verdampfer-Einheit 19 eine schnelle, räumlich begrenzte und effektive Übertragung thermischer Energie auf die entnommene Probe, um diese für eine Analyse aufzubereiten. Dadurch wird es möglich, an Flüssiggasleitungen unterschiedlicher Art kontinuierliche Analysen vorzunehmen und hierbei den Anteil unerwünschter Fraktionierungen gering zu halten.

### Bezugszeichenliste

- 11: Flüssiggasleitung
- 13: Probenentnahmevorrichtung
- 15: Anschlusseinrichtung
- 17: Probenspitze
- 19: Verdampfer-Einheit
- 21: Gasanalysator
- 25: Probenleitung
- 27: Entnahmeabschnitt
- 29: offenes Ende
- 30: Schutzrohr
- 31: Mantelfläche
- 32: Einströmöffnung
- 33: Ausströmöffnung
- 34: Stirnfläche
- 35: Entnahmeöffnung
- 37: Absaugrichtung
- 38: Einströmrichtung
- 39: Ausströmrichtung
- 40: erster Verdampfungsabschnitt
- 45: beheizbarer Körper
- 47: zweiter Verdampfungsabschnitt
- 49: Abscheidevorrichtung
- 50: Nadelventil
- 51: Aussparung
- 53: Heizpatrone
- 55: Drahtgeflecht
- 60: erstes Ventil
- 61: Akkumulator
- 63: zweites Ventil
- 65: Ablass
- 67: Druckregler
- 75: Kugelhahn
- 77: Flansch
- 80: Graphtringverschraubung
- 85: Führung
- H: Hauptströmungsrichtung

## Patentansprüche

1. Vorrichtung (13) zur kontinuierlichen Entnahme und Aufbereitung einer Fluidprobe aus einer Flüssiggasleitung (11) mit
einer Probenleitung (25), die ein in die Flüssiggasleitung (11) einführbares offenes Leitungsende (29) aufweist und
einer außerhalb der Flüssiggasleitung (11) anzuordnenden Verdampfer-Einheit (19) zum wenigstens teilweisen Verdampfen von durch die Probenleitung (25) strömenden Fluiden,
wobei die Verdampfer-Einheit (19) wenigstens einen beheizbaren Körper (45) umfasst,
wobei ein erster Verdampfungsabschnitt (40) der Probenleitung (25) in einer Abwärtsschraube verläuft und in einem wärmeleitenden Kontakt mit dem beheizbaren Körper (45) steht,
**dadurch gekennzeichnet, dass**
ein stromabwärts des ersten Verdampfungsabschnitts (40) befindlicher zweiter Verdampfungsabschnitt (47) der Probenleitung (25) in einer Aufwärtsschraube verläuft und ebenfalls in einem wärmeleitenden Kontakt mit dem beheizbaren Körper (45) steht, wobei
der erste Verdampfungsabschnitt (40) und der zweite Verdampfungsabschnitt (47) um den beheizbaren Körper (45) herumgeführt sind.

2. Vorrichtung nach Anspruch 1,
**dadurch gekennzeichnet, dass**
zumindest in dem ersten Verdampfungsabschnitt (40) der Probenleitung (25) ein Drahtgeflecht (55) angeordnet ist.

3. Vorrichtung nach einem der vorstehenden Ansprüche,
**dadurch gekennzeichnet, dass**
der beheizbare Körper (45) einen Metallblock, insbesondere einen Aluminiumblock, umfasst.

4. Vorrichtung nach Anspruch 3,
**dadurch gekennzeichnet, dass**
der Metallblock eine Aussparung (51) aufweist, in die ein elektrisches Heizelement (53) wie z. B. eine Heizpatrone einsetzbar ist.

5. Vorrichtung nach einem der vorstehenden Ansprüche,
**dadurch gekennzeichnet, dass**
die Verdampfer-Einheit (19) eine Heizmanschette umfasst, die den ersten Verdampfungsabschnitt (40) und den zweiten Verdampfungsabschnitt (47) wenigstens teilweise umschließt.

6. Vorrichtung nach einem der vorstehenden Ansprüche,
**dadurch gekennzeichnet, dass**
zwischen dem ersten Verdampfungsabschnitt (40) und dem zweiten Verdampfungsabschnitt (47) eine Abscheidevorrichtung (49) zum Abscheiden von Restflüssigkeit aus der Probenleitung (25) angeordnet ist.

7. Vorrichtung nach Anspruch 6,
**dadurch gekennzeichnet, dass**
dass die Abscheidevorrichtung (49) einen Koaleszenzfilter und bevorzugt ein Nadelventil (50) umfasst.

8. Vorrichtung nach einem der vorstehenden Ansprüche,
**dadurch gekennzeichnet, dass**
eine an der Flüssiggasleitung (11) anbringbare Anschlusseinrichtung (15) vorgesehen ist, über welche das offene Leitungsende (29) in die Flüssiggasleitung (11) einführbar und aus der Flüssiggasleitung (11) entfernbar ist.

9. Vorrichtung nach Anspruch 8,
**dadurch gekennzeichnet, dass**
die Anschlusseinrichtung (15) eine bedienbare Absperrvorrichtung (75), insbesondere einen Kugelhahn, und/oder eine Verschraubung (80), insbesondere eine Graphitringverschraubung, umfasst.

10. Vorrichtung nach zumindest einem der vorstehenden Ansprüche,
**dadurch gekennzeichnet, dass**
das offene Leitungsende (29) an einem Entnahmeabschnitt (27) der Probenleitung (25) ausgebildet ist, der einen gegenüber dem ersten Verdampfungsabschnitt (40) verringerten Leitungsquerschnitt aufweist.

11. Vorrichtung (13) zur kontinuierlichen Entnahme und Aufbereitung einer Fluidprobe aus einer Flüssiggasleitung (11) mit
einer Probenleitung (25), die ein in die Flüssiggasleitung (11) einführbares offenes Leitungsende (29) aufweist und
einer außerhalb der Flüssiggasleitung (11) anzuordnenden Verdampfer-Einheit (19) zum wenigstens teilweisen Verdampfen von durch die Probenleitung (25) strömenden Fluiden,
**dadurch gekennzeichnet, dass**
das offene Leitungsende (29) an einem Entnahmeabschnitt (27) der Probenleitung (25) ausgebildet ist, der einen gegenüber dem nachfolgenden Probenleitungsabschnitt verringerten Leitungsquerschnitt aufweist, und dass
der Entnahmeabschnitt (27) zumindest bereichsweise einen schraubenförmigen Verlauf aufweist.

12. Vorrichtung nach Anspruch 11,
**dadurch gekennzeichnet, dass**
der Entnahmeabschnitt (27) in einem Gehäuse (30) angeordnet ist, das wenigstens eine freie Einströmöffnung (32), wenigstens eine freie Ausströmöffnung (33) und eine dem offenen Leitungsende (29) zugeordnete Entnahmeöffnung (35) aufweist.

13. Vorrichtung nach Anspruch 12,
**dadurch gekennzeichnet, dass**
die Entnahmeöffnung (35) im in die flüssiggasführende Prozessleitunug montierten Zustand der Vorrichtung (13) quer zu der freien Einströmöffnung (32), quer zu der freien Ausströmöffnung (33) und/oder quer zu einer Hauptströmungsrichtung (H) der Flüssiggasleitung (11) ausgerichtet ist.

## Claims

1. An apparatus (13) for continuously removing and preparing a fluid sample from a liquefied gas line (11), said apparatus (13) comprising a sample line (25) which has an open line end (29) which can be inserted into the liquefied gas line (11); and
an evaporator unit (19) to be arranged outside the liquefied gas line (11) for an at least part evaporation of fluids flowing through the sample line (25), wherein the evaporator unit (19) comprises at least one heatable body (45), wherein a first evaporation section (40) of the sample line (25) extends in a downward helix and is in a heat conductive contact with the heatable body (45),
**characterized in that**
a second evaporation section (47) of the sample line (25) located downstream of the first evaporation section (40) extends in an upward helix and is likewise in a heat conductive contact with the heatable body (45), with
the first evaporation section (40) and the second evaporation section (47) being guided around the heatable body (45).

2. An apparatus in accordance with claim 1,
**characterized in that**
a wire mesh (55) is arranged at least in the first evaporation section (40) of the sample line (25).

3. An apparatus in accordance with one of the preceding claims,
**characterized in that**
the heatable body (45) comprises a metal block, in particular an aluminum block.

4. An apparatus in accordance with claim 3,
**characterized in that**
the metal block has a recess (51) into which an electrical heating element (53) such as a heating cartridge can be inserted.

5. An apparatus in accordance with one of the preceding claims,
**characterized in that**
the evaporator unit (19) comprises a heating sleeve which at least partly encloses the first evaporation section (40) and the second evaporation section (47).

6. An apparatus in accordance with one of the preceding claims,
**characterized in that**
a separation apparatus (49) for separating residual liquid from the sample line (25) is arranged between the first evaporation section (40) and the second evaporation section (47).

7. An apparatus in accordance with claim 6,
**characterized in that**
the separation apparatus (49) comprises a coalescence filter and preferably comprises a needle valve (50).

8. An apparatus in accordance with one of the preceding claims,
**characterized in that**
a connection device (15) is provided which can be attached to the liquefied gas line (11) and via which the open line end (29) can be introduced into the liquefied gas line (11) and can be removed from the liquefied gas line (11).

9. An apparatus in accordance with claim 8,
**characterized in that**
the connection device (15) comprises an operable shut-off apparatus (75), in particular a ball valve, and/or a screw connection (80), in particular a graphite ring screw connection.

10. An apparatus in accordance with at least any one of the preceding claims, **characterized in that**
the open line end (29) is formed at a removal section (27) of the sample line (25) which has a reduced line cross-section compared to the first evaporation section (40).

11. An apparatus (13) for continuously removing and preparing a fluid sample from a liquefied gas line (11), said apparatus (13) comprising a sample line (25) which has an open line end (29) which can be inserted into the liquefied gas line (11), and
an evaporator unit (19) to be arranged outside the liquefied gas line (11) for an at least part evaporation of fluids flowing through the sample line (25), **characterized in that**
the open line end (29) is formed at a removal section (27) of the sample line (25) which has a reduced line cross-section compared to the following sample line section; and **in that**
the removal section (27) at least regionally has a helical course.

12. An apparatus in accordance with claim 11,
**characterized in that**
the removal section (27) is arranged in a housing (30) which has at least one free inflow opening (32), at least one free outflow opening (33) and a removal opening (35) associated with the open line end (29).

13. An apparatus in accordance with claim 12,
**characterized in that**,
in the state of the apparatus (13) installed in the liquefied gas-conducting process line, the removal opening (35) is oriented transversely to the free inflow opening (32), transversely to the free outflow opening (33) and/or transversely to a main flow direction (H) of the liquefied gas line (11).

## Revendications

1. Dispositif (13) de prélèvement et de traitement en continu d'un échantillon de fluide à partir d'une conduite de gaz liquide (11), comportant une conduite d'échantillon (25) qui présente une extrémité de conduite ouverte (29) susceptible d'être introduite dans la conduite de gaz liquide (11), et
une unité d'évaporation (19) à disposer à l'extérieur de la conduite de gaz liquide (11) pour l'évaporation au moins partielle de fluides s'écoulant à travers la conduite d'échantillon (25),
l'unité d'évaporation (19) comprenant au moins un corps (45) susceptible d'être chauffé,
un premier tronçon d'évaporation (40) de la conduite d'échantillon (25) s'étendant en hélice descendante et étant en contact de conduction thermique avec le corps (45) susceptible d'être chauffé,
**caractérisé en ce que**
un deuxième tronçon d'évaporation (47) de la conduite d'échantillon (25), situé en aval du premier tronçon d'évaporation (40), s'étend en hélice ascendante et est également en contact de conduction thermique avec le corps (45) susceptible d'être chauffé, et
le premier tronçon d'évaporation (40) et le deuxième tronçon d'évaporation (47) sont menés autour du corps (45) susceptible d'être chauffé.

2. Dispositif selon la revendication 1,
**caractérisé en ce que**
un treillis métallique (55) est disposé au moins dans le premier tronçon d'évaporation (40) de la conduite d'échantillon (25).

3. Dispositif selon l'une des revendications précédentes,
**caractérisé en ce que**
le corps (45) susceptible d'être chauffé comprend un bloc métallique, en particulier un bloc en aluminium.

4. Dispositif selon la revendication 3,
**caractérisé en ce que**
le bloc métallique présente un évidement (51) dans lequel peut être inséré un élément chauffant électrique (53) tel qu'une cartouche chauffante.

5. Dispositif selon l'une des revendications précédentes,
**caractérisé en ce que**
l'unité d'évaporation (19) comprend un manchon de chauffage qui entoure au moins partiellement le premier tronçon d'évaporation (40) et le deuxième tronçon d'évaporation (47).

6. Dispositif selon l'une des revendications précédentes,
**caractérisé en ce que**
entre le premier tronçon d'évaporation (40) et le deuxième tronçon d'évaporation (47) est disposé un dispositif de séparation (49) pour séparer le liquide résiduel de la conduite d'échantillon (25).

7. Dispositif selon la revendication 6,
**caractérisé en ce que**
le dispositif de séparation (49) comprend un filtre à coalescence et, de préférence, une vanne à pointeau (50).

8. Dispositif selon l'une des revendications précédentes,
**caractérisé en ce que**
il est prévu un moyen de raccordement (15) pouvant être monté sur la conduite de gaz liquide (11), par lequel l'extrémité ouverte (29) de la conduite peut être introduite dans la conduite de gaz liquide (11) et être retirée de la conduite de gaz liquide (11).

9. Dispositif selon la revendication 8,
**caractérisé en ce que**
le moyen de raccordement (15) comprend un dispositif d'arrêt manœuvrable (75), en particulier un robinet à boisseau sphérique, et/ou un raccord à vis (80), en particulier un raccord à bague en graphite.

10. Dispositif selon l'une au moins des revendications précédentes,
**caractérisé en ce que**
l'extrémité ouverte (29) de la conduite est formée sur un tronçon de prélèvement (27) de la conduite d'échantillon (25), qui présente une section transversale de conduite réduite par rapport au premier tronçon d'évaporation (40).

11. Dispositif (13) de prélèvement et de traitement en continu d'un échantillon de fluide à partir d'une conduite de gaz liquide (11), comportant
une conduite d'échantillon (25) qui présente une extrémité de conduite ouverte (29) susceptible d'être introduite dans la conduite de gaz liquide (11), et
une unité d'évaporation (19) à disposer à l'extérieur de la conduite de gaz liquide (11) pour l'évaporation au moins partielle de fluides s'écoulant à travers la conduite d'échantillon (25),
**caractérisé en ce que**
l'extrémité ouverte (29) de la conduite est réalisée sur un tronçon de prélèvement (27) de la conduite d'échantillon (25), qui présente une section transversale de conduite réduite par rapport au tronçon suivant de la conduite d'échantillon, et **en ce que**
le tronçon de prélèvement (27) présente au moins localement une allure hélicoïdale.

12. Dispositif selon la revendication 11,
**caractérisé en ce que**
le tronçon de prélèvement (27) est disposé dans un boîtier (30) qui présente au moins une ouverture d'entrée libre (32), au moins une ouverture de sortie libre (33) et une ouverture de prélèvement (35) associée à l'extrémité ouverte (29) de la conduite.

13. Dispositif selon la revendication 12,
**caractérisé en ce que**
à l'état monté du dispositif (13) dans la conduite de traitement conduisant du gaz liquide, l'ouverture de prélèvement (35) est orientée transversalement à l'ouverture d'entrée libre (32), transversalement à l'ouverture de sortie libre (33) et/ou transversalement à une direction d'écoulement principal (H) de la conduite de gaz liquide (11).
